Europäisches Patentamt

European Patent Office

Office européen des brevets

(19)

(11) Veröffentlichungsnummer: **0 006 086**
A1

(12) # EUROPÄISCHE PATENTANMELDUNG

(21) Anmeldenummer: 79890010.6

(22) Anmeldetag: 30.05.79

(51) Int. Cl.²: **F 17 B 1/00**
F 02 C 6/16, F 17 D 1/00
B 65 D 87/10

(30) Priorität: 31.05.78 AT 3944/78

(43) Veröffentlichungstag der Anmeldung:
12.12.79 Patentblatt 79/25

(84) Benannte Vertragsstaaten:
BE CH DE FR GB IT NL SE

(71) Anmelder: Zeman, Hans
Donaustrasse 23
A-2346 Maria Enzersdorf-Südstadt(AT)

(72) Erfinder: Bauman, Ernst
Schönlaterngasse 11
A-1010 Wien(AT)

(74) Vertreter: Hamburger, Walter A., Dipl.-Ing. et al,
Postfach 96
A-1015 Wien(AT)

(54) Unter Wasser oder dgl. angeordneter Druckluftspeicher.

(57) Der Druckluftspeicher, bei welchem die gespeicherte
Luft (1) unter dem Druck einer Wassersäule steht, dient als
Energiespeicher. Die Druckluft kann, z.B. mittels eines Verdichters 6, in den Speicher gepumpt werden um im Bedarfsfall eine Turbine (7) oder dgl. anzutreiben.
   Die Druckluft (1) befindet sich in einem unter dem
Wasser (2) auf- und abbewegbaren Behälter (3), der nach
unten hin offen ist und in den - von unten her - ein
Verdrängungskörper (20) hineinragt.

FIG. 1

EP 0 006 086 A1

- 1 -

## Unter Wasser oder dgl. angeordneter Druckluftspeicher

Die Erfindung betrifft einen Druckluftspeicher, bei dem die Druckluft wenigstens teilweise unter dem Druck einer Flüssigkeitssäule steht.

Druckluftspeicher, bei denen die Druckluft unter dem Druck einer Wassersäule steht, sind bekannt.

Bei den bekannten Einrichtungen geht vom Scheitel einer Kaverne ein Luftkanal zu einem Kompressor bzw. zu einer Luftturbine, von der Sohle der Kaverne geht ein Wasserkanal zu einem höher liegenden Wasserbecken. Diese Einrichtung hat den Nachteil, daß natürliche Kavernen selten vorhanden sind, künstliche Kavernen nur unter großem Zeit- und Kapitalaufwand errichtbar sind.

Erfindungsgemäß werden diese Nachteile dadurch vermieden, daß sich die Druckluft in wenigstens einem unter Wasser auf- und abbewegbar angeordneten, im wesentlichen nach unten hin offenen Behälter oder dgl. befindet, in den von unten wenigstens ein Verdrängungskörper oder dgl. hineinragt. Dieser Druckluftbehälter oder dgl. kann gegebenenfalls auch in einer anderen Flüssigkeit angeordnet sein.

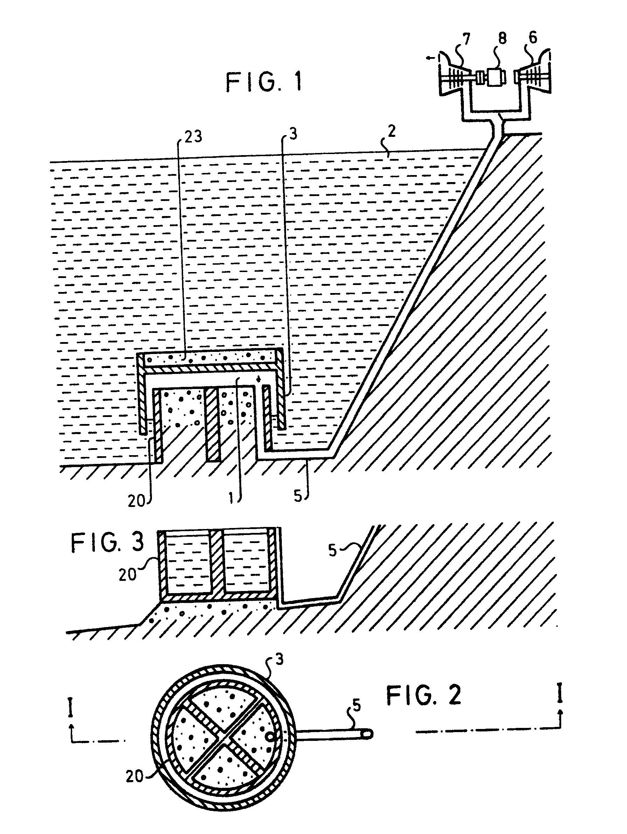

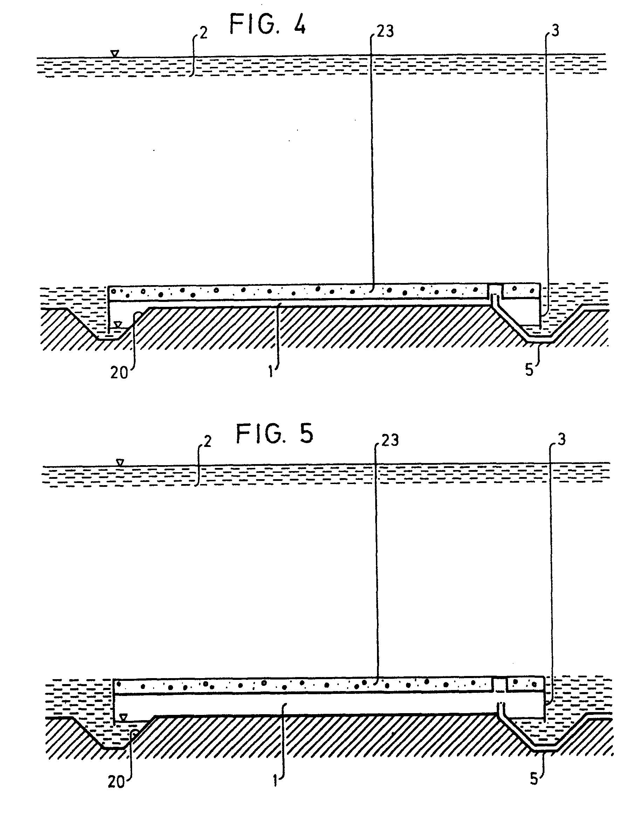

An Hand der Zeichnung sind weitere Merkmale der Erfindung beschrieben. Fig. 1 zeigt im Lotschnitt I - I einen erfindungsgemäßen Druckluftbehälter mit einem Verdrängungskörper oder dgl., der im wesentlichen aus einer Umwandung und einer innerhalb dieser befindlichen Schüttgutfüllung besteht.
Fig. 2 zeigt den gleichen Druckluftbehälter und Verdrängungskörper im Grundriß. Fig. 3 zeigt im Lotschnitt einen für
einen erfindungsgemäßen Druckluftspeicher vorgesehenen Verdrängungskörper oder dgl., der im wesentlichen aus einem
Behälter besteht, in dem sich eine Flüssigkeit, beispielsweise Wasser, befindet. Fig. 4 zeigt einen Lotschnitt
durch den Behälter mit viel Luft. Fig. 5 zeigt einen Lotschnitt durch den Behälter mit wenig Luft.

Gemäß den dargestellten Figuren ist mit 1 Luft bezeichnet.
Mit 2 ist eine Flüssigkeit, beispielsweise Wasser, bezeichnet, in der bzw. dem sich ein Druckluftbehälter 3 befindet.
Mit 5 ist eine Leitung bezeichnet, die vom Fassungsraum des
Behälters 3 zu einem Verdichter 6 oder dgl. bzw. zu einer
Antriebseinrichtung 7, Turbine oder dgl. geführt ist. Mit 8
ist ein Generator oder dgl. bezeichnet. Mit 20 ist ein Verdrängungskörper oder dgl. bezeichnet, der von unten in den
Behälter 3 hineinragt. Mit 23 ist Ballast bezeichnet, mit dem
gegebenenfalls der Behälter 3 beschwert ist. Der Behälter 3
ist im wesentlichen auf- und abbewegbar angeordnet. Er lastet
auf einem Polster von Luft 1, der sich im wesentlichen am
bzw. im Verdrängungskörper 20 abstützt. Wird Luft 1 in den
Behälter 3 gepumpt, vergrößert sich der Luftpolster 1 und
hebt den Behälter 3. Wird Luft 1 aus dem Behälter 3 entlassen,
verkleinert sich der Luftpolster 1 und der Behälter 3 bewegt
sich abwärts.

Die Auf- und Abbewegung des Behälters 3 kann senkrecht,
schräg oder im Bogen erfolgen. Als Führung für die Auf- und
Abbewegung kommt beispielsweise eine Gleit- oder Rollenführung in Betracht. Der Behälter 3 kann aber auch mittels
Schwenkarmen, Gelenksarmen, Scheren oder dgl. in seiner Auf-
und Abbewegung geführt sein. Der Verdrängungskörper 2o ist
im wesentlichen in seiner Höhenlage fix angeordnet. Er kann
aber gegebenenfalls gleichzeitig mit dem Behälter 3 auf- und
abbewegt werden, beispielsweise zwecks einfacherer Wartung in eine höher gelegene Höhenlage gebracht werden.

Gemäß Fig. 1 ist der Behälter 3 mit Ballast 23 beschwert. Als Ballast kann beispielsweise Schüttgut wie Sand, Schotter, Steine, Erze oder dgl. verwendet werden.

Vorzugsweise ist der Behälter 3 im wesentlichen zylinderförmig ausgebildet. Er kann aber auch andere Formen aufweisen, insbesondere wenn er aus mehreren Kammern bzw. Zellen besteht bzw. Versteifungswände, -rippen, -rahmen oder dgl. aufweist.

Um ein Kippen des Behälters 3 zu vermeiden, können mehrere, vorzugsweise im wesentlichen·in nebeneinanderliegenden Bereichen befindliche Behälter 3 miteinander verbunden sein. Zu diesem Zweck kann der Behälter 3 auch aus mehreren Kammern, Zellen oder dgl. bestehen. Wie die in der Zeichnung dargestellten Ausführungsbeispiele zeigen, ist vom Fassungsraum des Behälters 3 wenigstens eine Leitung 5 zu wenigstens einem Verdichter 6 oder dgl. bzw. Antriebseinrichtung 7, Turbine oder dgl. geführt. Mit der Antriebseinrichtung 7 oder dgl. kann ein Generator 8, eine Wärmepumpe, Wasserpumpe oder andere Geräte angetrieben werden. Es kann eine Einrichtung angeordnet sein, mittels der die Luft 1 vorgewärmt wird, bevor sie zu den Antriebsorganen der Antriebseinrichtung 7 oder dgl. gelangt. Mit dem Verdichter 6 bzw. die daran angeschlossene Druckluftleitung kann eine Wärmetauscheinrichtung verbunden sein, mittels derer die beim Verdichten der Luft 1 entstehende Wärme auf ein wärmetragendes Medium übertragen wird, das sich in einem gesonderten System befindet. Die Mündung der Leitung 5 kann im Bereich des Scheitels des Behälters 3 liegen. Die Mündung der Leitung 5 kann aber auch im wesentlichen im Bereich des Scheitels des Verdrängungskörpers 2o oder dgl. liegen. Im wesentlichen im Bereich des Scheitels des Behälters 3 kann sich ein kaminförmiger Fortsatz befinden, in den das Ende der Leitung 5 hineinragt, wenn sich der Behälter 3 auf einer tiefen Höhenlage befindet, das heißt, wenn er mit wenig Luft 1 gefüllt ist. Der Verdrängungskörper 2o kann wenigstens teilweise aus Schüttgut oder dgl. bestehen. Er kann im wesentlichen wenigstens eine Umwandung aufweisen bzw. mit wenigstens einem Gitter, Loch-

- 4 -

wand oder dgl. umgeben sein, innerhalb dessen bzw. derer sich
Füllmaterial oder dgl. befindet. Der Verdrängungskörper 2o
oder dgl. kann wenigstens eine Reihe im Kreis angeordneter
Pfähle oder wenigstens eine im wesentlichen kreisförmige
Spundwand oder dgl. aufweisen, die Schüttmaterial umschließen
bzw. umschließt. Der Verdrängungskörper 2o oder dgl. bzw. das
in ihm befindliche Schüttmaterial bzw. Füllmaterial kann
mit wenigstens einer Abdeckung versehen sein. Die Abdeckung
kann beispielsweise eine Platte, Haut, Folie oder dgl. sein.

Gemäß dem in der Zeichnung dargestellten Ausführungsbeispiel
ist der Verdrängungskörper 2o im wesentlichen zylinderförmig.
In der Regel wird er im wesentlichen eine ähnliche Form aufweisen, wie der Behälter 3. Der Verdrängungskörper 2o kann
selbstverständlich aus mehreren Teilen zusammengesetzt sein.
Es können aber auch mehrere Verdrängungskörper 2o angeordnet
sein. Gemäß den Figuren 1 und 2 besteht der Verdrängungskörper 2o im wesentlichen aus einer zylinderförmigen Umwandung, die mit Füllmaterial gefüllt ist. Als Füllmaterial
kann beispielsweise Abräummaterial vom Boden des Gewässers
verwendet werden, in dem der Druckluftspeicher angeordnet
ist. Es kann aber auch Füllmaterial mittels Schiffen oder
dgl. zum Einsatzort transportiert und abgesenkt werden.

Der Verdrängungskörper 2o kann aber im wesentlichen auch aus
wenigstens einem Behälter, Gefäß oder dgl. bestehen, in dem
sich eine Füllung befindet, wie Fig. 3 zeigt. Die Füllung
kann Luft sein. Vorzugsweise ist die Füllung eine Flüssigkeit,
insbesondere Wasser. Die Füllung kann aber auch wenigstens
teilweise Schüttgut oder dgl. sein. Ist der Verdrängungskörper 2o relativ groß, kann er auch aus mehreren Behältern,
Gefäßen oder dgl. bestehen.

Gemäß den Figuren 1 und 2 ist der Verdrängungskörper 2o
mittels Wänden, Rippen oder dgl. verstärkt. Gemäß Figur 3
weistder Verdrängungskörper 2o mehrere Kammern auf, in denen
sich Flüssigkeit befindet.

- 5 -

Die Druckluftspeicherung geht im wesentlichen so vor sich, daß mittels wenigstens eines Verdichters 6, Kompressors oder dgl. durch wenigstens eine Leitung 5 Luft 1 in den Behälter 3 gepumpt wird, wobei sich dieser aufwärts bewegt, da der Luftpolster 1 höher wird. Bei der Anwendung der Druckluft 1 wird diese vom Behälter 3 durch wenigstens eine Leitung 5 zu wenigstens einer Antriebseinrichtung 7, Turbine oder dgl. geleitet und danach in die Atmosphäre entlassen. Dabei bewegt sich der Behälter 3 abwärts, da die Höhe des Luftpolsters 1 abnimmt. Die Druckluft 1 kann erwärmt werden, bevor sie zu den Antriebsorganen der Antriebseinrichtung 7 gelangt.

Beim Verdichten der Luft 1 kann die dabei entstehende Wärme über einen Wärmetauscher auf ein wärmetragendes Medium abgegeben werden, das sich in einem eigenen Gefäß- bzw. Leitungssystem befindet. Die Wärme der vom Verdichter 6 zum Behälter 3 strömenden Luft 1 kann an eine Wärmespeichermasse oder dgl. abgegeben werden, die von der Luft 1 durch ein Kanalsystem durchströmt wird.

Umgekehrt kann eine wärmespeichernde Masse oder dgl. Wärme an die Druckluft 1 abgeben, die vom Behälter 3 zur Antriebseinrichtung 7 strömt.

Ein erfindungsgemäßer Druckluftspeicher kann so errichtet werden, daß am Boden eines Gewässers wenigstens ein Verdrängungskörper 2o oder dgl. errichtet wird und danach wenigstens ein Behälter 3 abgesenkt oder im wesentlichen über den Verdrängungskörper 2o gestülpt wird. Es kann beispielsweise am Boden eines Gewässers wenigstens eine Umwandung, Pfahlwand, Spundwand, Gitterwand, Lochwand oder dgl. errichtet werden, wenigstens teilweise mit Füllmaterial oder dgl. gefüllt und danach der Behälter 3 im wesentlichen über den Verdrängungskörper 2o oder dgl. gestülpt werden. Es kann aber auch am Boden des Gewässers wenigstens ein Behälter, Gefäß oder dgl., der bzw. das im wesentlichen die Umwandung des Verdrängungskörpers oder dgl. bildet, errichtet werden bzw. zum Boden des

0006086

- 6 -

Gewässers abgesenkt werden. Der Verdrängungskörper 2o kann selbstverständlich im wesentlichen aus einem Stück bestehen.

Der Verdrängungskörper 2o kann auch im wesentlichen mitsamt dem Behälter 3 abgesenkt bzw. gehoben werden.

Selbstverständlich ist die Erfindung nicht auf die in der Zeichnung dargestellten Ausführungsbeispiele beschränkt. Es kann beispielsweise der Verdrängungskörper 2o oder dgl. im wesentlichen von einer ringförmigen Bodenvertiefung umschlossen sein bzw. durch Anordnung derselben gebildet sein. Vorzugsweise ragt wenigstens ein Teil der seitlichen Umwandung des Behälters 3 in eine solche ringförmige Bodenvertiefung.

Es kann mit dem Behälter 3 bzw. dem Ballast 23 wenigstens ein Luftbehälter oder dgl. verbunden sein, der beim Normalbetrieb der erfindungsgemäßen Einrichtung im wesentlichen nicht mit Luft 1 gefüllt ist. Dieser zusätzliche Luftbehälter oder dgl. dient vorzugsweise zum Heben des Behälters 3 bzw. des Ballastes 23 in eine höhere Höhenlage. So kann beispielsweise der Behälter 3 von Zeit zu Zeit in eine höhere Höhenlage gebracht und dort wegen des geringeren Atmosphärendruckes im Behälter 3 leichter gewartet, gedichtet oder dgl. werden. Der Behälter 3 kann aber auch in eine höhere Höhenlage gebracht und zu einer Werft oder dgl. geschwommen werden. Das Heben des Behälters 3 erfolgt durch Einpumpen von Luft 1 in den bzw. die zusätzlichen Luftbehälter.

Der Behälter 3 kann im wesentlichen aus mehreren Schichten bestehen. Es können auch mehrere Behälter 3 übereinander angeordnet sein. Der Behälter 3 kann Wände, Rippen, Stege, Hohlräume oder dgl. aufweisen. Auch der Verdrängungskörper 2o oder dgl. kann Wände, Rippen, Stege, Hohlräume oder dgl. aufweisen. Der Druckluftspeicher kann sich in einem natürlichen oder künstlichen Gewässer befinden. Er kann beispielsweise im Meer, in einem See, Kanal, Fluß oder dgl. angeordnet sein.

Die Einrichtung funktioniert prinzipiell nicht nur mit Wasser 2 sondern auch mit anderen Flüssigkeiten.

Als Herstellungsmaterial für den erfindungsgemäßen Druckluftspeicher kommen beispielsweise Beton, Stahlbeton, Metall wie Stahl und Aluminium, Kunststoff, Holz, Asbest bzw. Asbestzement und dgl. in Betracht. Als Ballast bzw. Schüttgut oder dgl. kann man beispielsweise Sand, Schotter, Steine, Erze, Ton, gegebenenfalls diverse Mineralien verwenden. Es können Einrichtungen bzw. Organe zur Verbindung des Behälters 3 mit wenigstens einem zusätzlichen, z.B. hutförmigen Luftbehälter oder dgl. angeordnet sein, mit Hilfe dessen der Behälter 3 zur Oberfläche des Gewässers gehoben wird.

Der Behälter 3 kann beispielsweise im wesentlichen kuppelförmig sein. Es können mehrere Behälter 3 kettenförmig aufeinanderfolgend angeordnet sein. Der Behälter 3 kann beispielsweise im wesentlichen ringförmig sein. Er kann ringförmig angeordnete Kammern bzw. Zellen aufweisen. Es können mehrere Behälter 3 ringförmig angeordnet sein.

- 1 -

· Patentansprüche

1. Druckluftspeicher, bei dem die Druckluft wenigstens teilweise unter dem Druck einer Wassersäule steht, dadurch gekennzeichnet, daß sich die Druckluft (1) in wenigstens einem unter Wasser (2) auf- und abbewegbar angeordneten, im wesentlichen nach unten hin offenen Behälter (3) oder dgl. befindet, in den von unten wenigstens ein Verdrängungskörper (2o) oder dgl. hineinragt.

2. Druckluftspeicher nach Anspruch 1, dadurch gekennzeichnet, daß der Verdrängungskörper (2o) oder dgl. im wesentlichen in seiner Höhenlage fix angeordnet ist.

3. Druckluftspeicher nach Anspruch 1 und/oder 2, dadurch gekennzeichnet, daß der Behälter (3) mit Ballast (23) beschwert ist.

4. Druckluftspeicher nach einem oder mehreren der Ansprüche 1 bis 3, dadurch gekennzeichnet, daß der Behälter (3) im wesentlichen zylinderförmig ist.

5. Druckluftspeicher nach einem oder mehreren der Ansprüche 1 bis 4, dadurch gekennzeichnet, daß mehrere vorzugsweise im wesentlichen in nebeneinanderliegenden Bereichen befindliche Behälter (3) miteinander verbunden sind.

6. Druckluftspeicher nach einem oder mehreren der Ansprüche 1 bis 5, dadurch gekennzeichnet, daß der Behälter (3) Kammern, Zellen oder dgl. aufweist.

0006086

- 2 -

7. Druckluftspeicher nach einem oder mehreren der Ansprüche 1 bis 6, dadurch gekennzeichnet, daß der Behälter (3) mittels Führungseinrichtungen oder dgl. auf- und abbewegbar geführt ist.

8. Druckluftspeicher nach einem oder mehreren der Ansprüche 1 bis 7, dadurch gekennzeichnet, daß vom Fassungsraum des Behälters (3) wenigstens eine Leitung (5) zu wenigstens einem Verdichter (6) und/oder Antriebseinrichtung (7), Turbine oder dgl. geführt ist.

9. Druckluftspeicher nach einem oder mehreren der Ansprüche 1 bis 8, dadurch gekennzeichnet, daß im wesentlichen im Bereich des Scheitels des Behälters (3) wenigstens ein kaminförmiger Fortsatz angeordnet ist, in den das Ende der Leitung (5) hineinragt, wenn sich der Behälter (3) in einer tiefen Höhenlage befindet.

1o. Druckluftspeicher nach einem oder mehreren der Ansprüche 1 bis 9, dadurch gekennzeichnet, daß der Verdrängungskörper (2o) wenigstens teilweise aus Schüttgut oder dgl. besteht.

11. Druckluftspeicher nach einem oder mehreren der Ansprüche 1 bis 1o, dadurch gekennzeichnet, daß der Verdrängungskörper (2o) im wesentlichen aus wenigstens einer Umwandung, Umgitterung oder dgl. besteht, innerhalb der sich Füllmaterial oder dgl. befindet.

12. Druckluftspeicher nach einem oder mehreren der Ansprüche 1 bis 11, dadurch gekennzeichnet,

0006086

- 3 -

.daß der Verdrängungskörper (2o) im wesentlichen
zylinderförmig ist.

13. Druckluftspeicher nach einem oder mehreren der Ansprüche
    1 bis 12,
    dadurch gekennzeichnet,
    daß der Verdrängungskörper (2o) aus mehreren Teile besteht bzw. daß mehrere Verdrängungskörper (2o) angeord-
    net sind.

14. Druckluftspeicher nach einem oder mehreren der Ansprüche
    1 bis 13,
    dadurch gekennzeichnet,
    daß der Verdrängungskörper (2o) im wesentlichen aus wenigstens einem Behälter, Gefäß oder dgl. besteht, in dem
    sich eine Füllung befindet.

15. Druckluftspeicher nach einem oder mehreren der Ansprüche
    1 bis 14,
    dadurch gekennzeichnet,
    daß der Verdrängungskörper (2o) im wesentlichen aus
    wenigstens einem Behälter, Gefäß oder dgl. besteht, in
    dem sich wenigstens teilweise Luft befindet.

16. Druckluftspeicher nach einem oder mehreren der Ansprüche
    1 bis 15,
    dadurch gekennzeichnet,
    daß der Verdrängungskörper (2o) im wesentlichen aus
    wenigstens einem Behälter, Gefäß oder dgl. besteht, in
    dem sich wenigstens teilweise Flüssigkeit, insbesondere
    Wasser befindet.

17. Druckluftspeicher nach einem oder mehreren der Ansprüche
    1 bis 16,
    dadurch gekennzeichnet,

- 4 -

daß der Verdrängungskörper (2o) im wesentlichen aus wenigstens einem Behälter, Gefäß oder dgl. besteht, in dem sich wenigstens teilweise Schüttgut oder dgl. befindet.

18. Druckluftspeicher nach einem oder mehreren der Ansprüche 1 bis 17,
dadurch gekennzeichnet,
daß der Verdrängungskörper (2o) oder dgl. im wesentlichen aus mehreren Behältern, Gefäßen oder dgl. besteht, die wenigstens teilweise mit Luft, Flüssigkeit, Schüttgut oder dgl. gefüllt sind.

19. Druckluftspeicher nach einem oder mehreren der Ansprüche 1 bis 18,
dadurch gekennzeichnet,
daß der Verdrängungskörper (2o) wenigstens eine Reihe im Kreis angeordneter Pfähle oder dgl. bzw. wenigstens eine Spundwand oder dgl. aufweist, die Schüttmaterial oder dgl. umschließen bzw. umschließt.

2o. Druckluftspeicher nach einem oder mehreren der Ansprüche 1 bis 19,
dadurch gekennzeichnet,
daß beim Verdrängungskörper (2o) wenigstens eine Gitterwand, Lochwand oder dgl. angeordnet ist, die Schüttmaterial oder dgl. umschließt.

21. Druckluftspeicher nach einem oder mehreren der Ansprüche 1 bis 2o,
dadurch gekennzeichnet,
daß wenigstens ein Teil der seitlichen Umwandung des Behälters (3) in die ringförmige Bodenvertiefung hineinragt.

0006086

# FIG. 1

# FIG. 3

# FIG. 2

FIG. 4

FIG. 5

## EUROPÄISCHER RECHERCHENBERICHT

Europäisches
Patentamt

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | DE - A - 2 447 246 (WINKEL)<br><br>* Seite 1,letzte Absatz - Seite 5, erste Absatz; Abbildungen *<br><br>-- | 1 | F 17 B 1/00<br>F 02 C 6/16<br>F 17 D 1/00<br>B 65 D 87/10 |
| A | ENERGIE, Jahrgang 23, Nr. 2, Februar 1971, Technischer Verlag RESCH K.G., Graefefing (DE) Dr. Ing. ZBYSZKO JAROSZEWICZ: "Druckluftspeicherung für den Gasturbinenbetrieb" Seiten 53-55<br><br>* Seite 53, Bild 2 *<br><br>-- | 1 | |
| A | DE - C - 741 993 (LEHR)<br><br>* Anspruch; abbildungen *<br><br>-- | 1 | RECHERCHIERTE SACHGEBIETE (Int. Cl.²)<br><br>F 17 B<br>F 16 K<br>F 02 C<br>B 65 D<br>F 17 D |
| A | FR - A - 380 470 (MORANE)<br><br>* Ganzes Dokument *<br><br>---- | 1 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-09-1979 | VAN REETH |